# FASCICULE DE BREVET EUROPEEN

(11) **EP 2 609 311 B1**
(45) Date de publication et mention de la délivrance du brevet: **26.04.2017**
(21) Numéro de dépôt: 11761654.0
(22) Date de dépôt: 23.08.2011
(51) Int. Cl.: F02C 6/08, B64D 13/06, B64D 41/00

(54) **PROCÉDÉ D'OPTIMISATION DE L'OPÉRABILITÉ DE MOTORISATION D'UN AÉRONEF ET GROUPE DE PUISSANCE AUTONOME DE MISE EN OEUVRE**
VERFAHREN ZUR OPTIMIERUNG DES MOTORANTRIEBEINSATZES EINES FLUGZEUGS UND DIESBEZÜGLICHE AUTONOME MOTORBAUGRUPPE
METHOD OF OPTIMISING THE OPERABILITY OF AN AIRCRAFT MOTOR DRIVE AND RELATED AUTONOMOUS POWERING GROUP

(30) Priorité: 25.08.2010 FR 1056764
(43) Date de publication de la demande: 03.07.2013
(73) Titulaire: Safran Helicopter Engines, 64510 Bordes (FR)
(72) Inventeur: HAILLOT, Jean-Michel, F-64800 Beuste (FR)
(74) Mandataire: Gevers & Orès
(86) Numéro de dépôt international: PCT/FR2011/051944
(87) Numéro de publication internationale: WO 2012/025688

(56) Documents cités:
- EP-A2- 0 738 655
- EP-A2- 1 630 099
- EP-A2- 1 728 990
- EP-A2- 1 918 202
- GB-A- 2 216 603
- US-A- 3 965 673
- US-A- 5 239 830
- US-A1- 2004 129 835
- US-B1- 6 283 410

## Description

### DOMAINE TECHNIQUE

L'invention concerne un procédé d'optimisation de l'opérabilité de la motorisation d'un aéronef, ainsi qu'à un groupe de puissance principal apte à mettre en oeuvre un tel procédé.

L'invention s'applique à la motorisation des aéronefs, c'est-à-dire essentiellement aussi bien à la motorisation d'avions (réacteurs, turboréacteurs, turbopropulseurs), qu'à la motorisation d'hélicoptères (turbomoteur).

Un moteur d'aéronef comporte classiquement, et de manière simplifiée, un ensemble de compresseur-chambre de combustion-turbine formant un générateur de gaz. Après leur combustion, les gaz chauds sont détendus dans la turbine qui entraîne mécaniquement le compresseur via un arbre haute pression (HP en abrégé) ou corps HP, et fournissent de l'énergie potentielle.

Dans le cas d'un avion, cette énergie potentielle génère l'énergie de propulsion sous la forme de poussée soit directement (dans les réacteurs) soit indirectement via le corps basse pression BP (dans les turboréacteurs à soufflante ou les turbopropulseurs à hélice). Dans le cas d'un hélicoptère, cette énergie de propulsion est transmise à la voilure tournante par l'intermédiaire d'une boîte de transmission de puissance (connue généralement sous l'appellation BTP). Les turbomachines délivrent de l'énergie dans le temps correspondant à un niveau de transmission de puissance instantanée.

Les débits d'air dans le compresseur et la turbine peuvent entraîner, dans certaines conditions de fonctionnement, le phénomène dit de pompage du compresseur qui fait remonter les gaz chauds du générateur de gaz vers l'entrée d'air du compresseur et peut conduire aux conséquences les plus graves (chute brutale de la portance, inversion de poussée, ruptures des pales, destruction du moteur). Il est donc nécessaire de garder de la marge au pompage. Un tel phénomène est à proscrire dans le domaine aéronautique.

Une ligne de pompage peut être tracée pour chaque phase de vol en fonction du rapport de pression d'entrée/sortie d'air et du débit d'air. La ligne de fonctionnement du moteur doit rester en dessous de cette ligne de pompage pour éviter en particulier toute perte de poussée. L'écart entre la ligne de fonctionnement et la ligne de pompage, appelé marge au pompage, se réduit lorsque la vitesse du corps HP est faible.

La marge au pompage est d'autant réduite que des prélèvements mécaniques sur les corps HP sont effectués pour alimenter les équipements électriques et hydrauliques (alternateurs, pompes, etc.). Les spécifications actuelles tendent vers une augmentation sensible de ces prélèvements. Or une marge au pompage suffisante doit pouvoir permettre une accélération du corps HP lorsqu'une remise des gaz est demandée en fonction des circonstances du vol.

Un fonctionnement similaire est prévu pour les turbomoteurs d'hélicoptères. Cependant, en régime de panne d'un moteur (en abrégé OEI, initiales de « One Engine Inoperative » en terminologie anglaise), une accélération rapide est demandée au corps HP du moteur sain.

### ÉTAT DE LA TECHNIQUE

De manière générale, l'importance des demandes de prélèvements mécaniques limitent les capacités d'accélération des moteurs pendant les phases transitoires, c'est-à-dire l'opérabilité de la source motrice. Pour obtenir les accélérations souhaitées, il serait utile d'augmenter la marge au pompage par une ligne de fonctionnement plus basse. Il serait également possible de prélever de l'air sur le moteur principal. Mais alors, dans un cas comme dans l'autre, le rendement global de la turbomachine est sensiblement affecté.

L'aéronef étant un système isolé, la seule solution est de limiter temporairement les demandes de prélèvement mécanique sur le corps HP. Mais les conséquences peuvent être dommageables sur le matériel et sur les fonctions exercées par les équipements (conditionnement d'air de la cabine, train d'atterrissage, etc.). Voir par exemple US 5 239 830 A, EP 1 630 099 A2.

### EXPOSÉ DE L'INVENTION

L'invention vise à supprimer la contrainte de prélèvement mécanique dans les moteurs lors des phases transitoires afin d'optimiser l'opérabilité de l'ensemble moteur pendant ces phases. Pour ce faire, un apport de puissance est fourni, en particulier pendant ces phases, par une source supplémentaire de puissance non directement propulsive de classe moteur. Une génération de puissance est dite de classe moteur lorsque l'architecture et les performances de cette génération de puissance est apte à la certification moteur d'utilisation pendant toutes les phases de vol, au même titre qu'une génération de puissance fournie par un moteur principal d'aéronef.

Plus précisément, la présente invention a pour objet un procédé d'optimisation de l'opérabilité de la motorisation d'un aéronef comportant des moteurs principaux comme sources de motorisation principales. Une telle optimisation consiste, à l'aide d'une source de puissance principale de classe moteur comme source de motorisation, à fournir la totalité de l'énergie non propulsive et, pendant les phases transitoires des moteurs, à fournir au plus partiellement une puissance supplémentaire sur le corps HP des moteurs principaux. Les phases transitoires des moteurs recouvrent plus particulièrement les phases d'accélérations, les cas de panne et le fonctionnement en mode ralenti.

Selon des modes de mise en oeuvre préférés, la puissance fournie sur le corps HP des moteurs principaux est délivrée par un générateur électrique équipant la source de puissance principale en liaison avec un démarreur électrique des moteurs principaux converti en moteur - comme lors du démarrage au sol des moteurs principaux - ou par prélèvement d'air comprimé sur la source de puissance principale en liaison avec un démarreur à air des moteurs principaux.

En particulier, la source de puissance principale peut apporter de la puissance sur le corps HP des moteurs principaux afin de fournir des taux d'accélérations plus élevés avec éventuellement un ralenti réglé à un niveau inférieur au ralenti nominal.

Plus particulièrement en application avion, en phase de descente de vol comme phase transitoire, la source de puissance principale fournit de la puissance sur le corps HP des moteurs principaux. Une opérabilité optimisée est ainsi réalisée, en termes de capacité d'accélération maximalisée, par une augmentation de la marge au pompage des moteurs principaux dans une phase de vol où cette marge serait au minimum sans apport de puissance supplémentaire, avec une ligne de fonctionnement au plus près du pompage.

Plus particulièrement en application hélicoptère, en cas de panne d'un moteur principal, la source de puissance principale fournit la puissance électrique sur le corps HP du moteur principal sain pour que ce dernier puisse disposer d'une capacité d'accélération telle que sa marge au pompage soit suffisante. Ainsi, la marge au pompage est préservée avec une opérabilité dès lors optimisée.

Donc en application aéronef, en phase stabilisée comme en phase transitoire, la source de puissance principale fournit de la puissance sur le corps HP des moteurs principaux.

L'invention se rapporte également à un groupe de puissance principal, ci-après groupe GPP, apte à optimiser l'opérabilité de la motorisation d'un aéronef selon le procédé ci-dessus. Un tel groupe de puissance principal a pour base un groupe de puissance du type groupe auxiliaire de puissance, en abrégé GAP (ou APU, initiales de « Auxiliary Power Unit », en terminologie anglaise), fiabilisée pour être de classe moteur et combinée à des moyens de régulation de l'air comprimé en cabine.

Les GAP équipent habituellement les aéronefs pour alimenter au sol les différents équipements consommateurs d'énergie (puissances électrique, pneumatique et hydraulique, conditionnement d'air), et démarrer les moteurs principaux. Lorsqu'un moteur est en panne, certains GAP sont suffisamment sécurisés pour pouvoir être redémarrés pendant le vol afin de tenter de redémarrer le moteur défaillant et/ou de fournir une partie de l'énergie électrique aux équipements en vol.

Un GAP se compose classiquement d'un générateur de gaz et des moyens d'entraînement des équipements (compresseur de charge, pompes à carburant et hydraulique, générateur électrique et/ou démarreur/générateur électrique, etc.), ou via une boîte de transfert de puissance, avec une adaptation des vitesses de rotation. Un prélèvement d'air à la sortie du compresseur de charge ou du compresseur d'entrée sert au démarrage pneumatique des moteurs principaux.

L'utilisation d'un GAP même sécurisé pendant les phases de vol pour fournir de l'énergie non propulsive est a priori considéré comme irréaliste du fait d'un rendement d'énergie défavorable par rapport aux moteurs principaux : faire fonctionner un GAP pendant toute la durée du vol est consommateur de carburant.

Or, transformé en groupe de puissance de classe moteur pour fournir de l'énergie pneumatique au strict besoin de la cabine en utilisation permanente, un aéronef intégrant un tel groupe présente alors un bilan favorable et permet d'optimiser l'opérabilité de la motorisation de l'aéronef.

A ce titre, dans un aéronef comportant des équipements consommateurs d'énergie, en particulier une cabine renouvelée en air et régulée en température et/ou en pression à l'aide d'un système de régulation ECS, des moteurs principaux de génération de puissance et une unité de contrôle de vol, un groupe de puissance principal selon l'invention - intégré dans un compartiment isolé par une cloison feu des autres zones de l'aéronef et équipé d'une entrée d'air extérieur et d'une tuyère de sortie - comporte un groupe de puissance de classe moteur du type décrit ci-dessus équipé d'un générateur de gaz et d'une turbine de puissance d'entraînement d'équipements comprenant un compresseur de charge. Le compresseur de charge est couplé, via une commande de régulation qui communique avec l'unité de contrôle, au système ECS afin de fournir l'énergie pneumatique nécessaire à la cabine.

Selon de modes de réalisation particuliers :
- le groupe de puissance principal est couplé à une structure de récupération comportant une turbine de récupération d'énergie d'entraînement des équipements avec la turbine de puissance et couplée, en entrée d'air, à la sortie de la cabine pour refroidir, en sortie d'air, les équipements, le compresseur de charge étant intégré à cette structure de récupération comme fournisseur d'énergie pneumatique à la cabine ;
- la turbine de récupération éjecte un flux d'air en sortie dans le compartiment du groupe de puissance principal qui, après avoir refroidi les équipements et accessoires contenus dans le compartiment arrière, est évacué dans la tuyère d'échappement par un effet de trompe induit par la vitesse d'éjection des gaz du flux d'air chaud de la turbine de puissance ;

Dans ces conditions, la récupération d'énergie en sortie de cabine - sous forme de pression et/ou de température - est optimisée par la proximité de la source de puissance principale, tout en garantissant une sortie de flux d'air en sortie de cabine avec une contre-pression contrôlée dans la cabine. En outre, atteler la récupération d'énergie à une source de génération de puissance principale, et non à un simple compresseur ou un alternateur, permet d'absorber des survitesses, qui peuvent se déclencher en cas de panne, grâce à l'inertie produite par l'effet de masse des composants de la source de génération de puissance et de l'ensemble des consommateurs.

De plus, la récupération d'énergie en sortie de cabine peut être effectuée en complétant l'énergie potentielle contenue dans le flux d'air sortie cabine par de l'énergie thermique utilisée pour refroidir des systèmes dédiés à des équipements de l'aéronef avant d'être de nouveau enrichi par l'échange thermique entre lesdits flux d'air.

### BRÈVE DESCRIPTION DES FIGURES

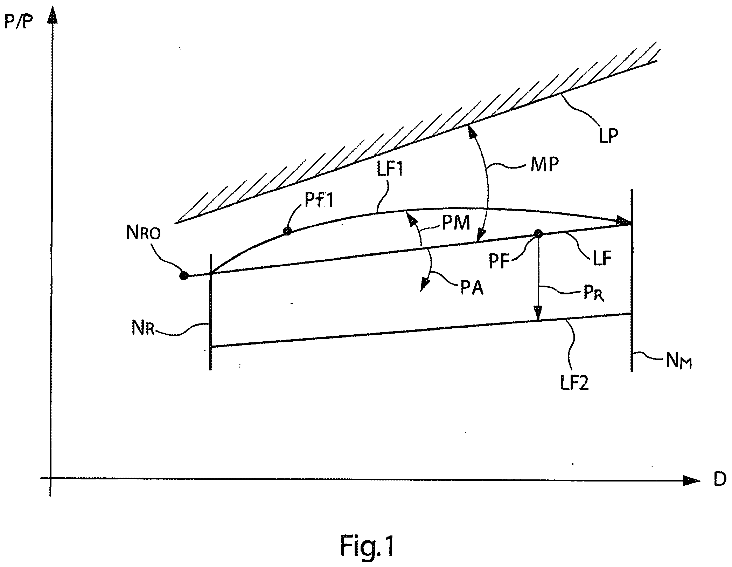

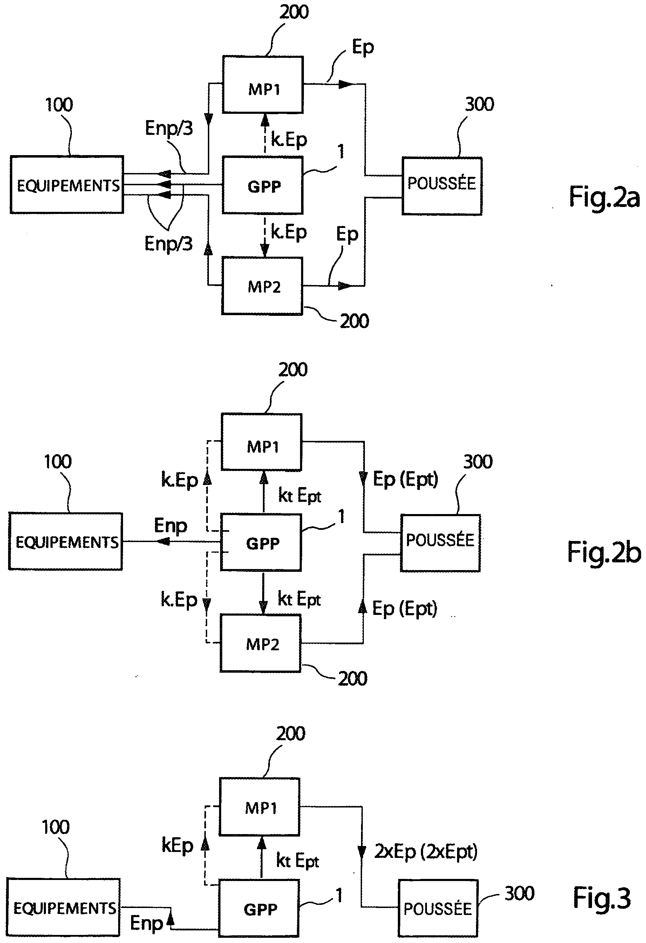

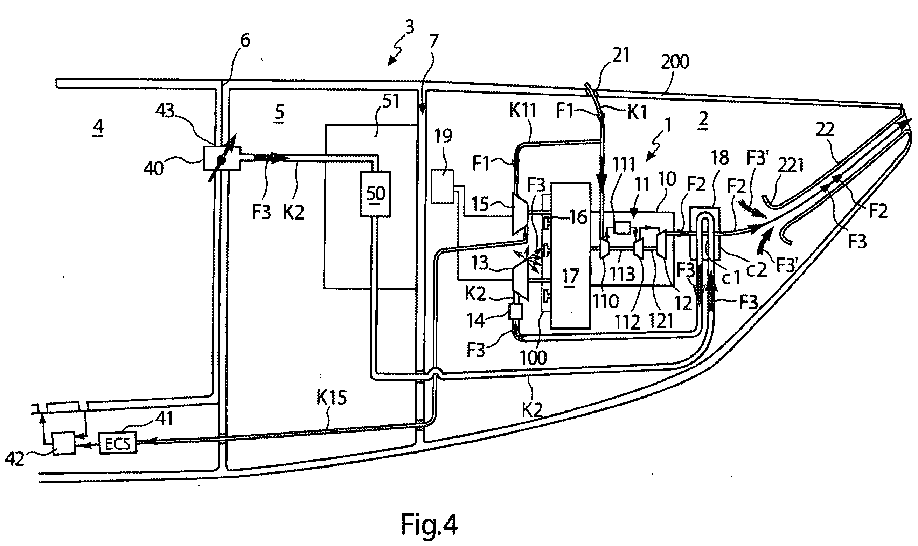

D'autres aspects, caractéristiques et avantages de l'invention apparaîtront dans la description non limitative qui suit, relative à des modes de réalisation particuliers, en référence aux dessins annexés qui représentent, respectivement :
- en figure 1, un graphe des variations de la ligne de fonctionnement d'un moteur d'aéronef ;
- en figures 2a et 2b, deux schémas de répartition des énergies propulsives et non propulsives, notamment en phase transitoire (figure 2b), fournies par les moteurs principaux et le groupe de puissance principal d'un aéronef en vol nominal ;
- en figure 3, un schéma de répartition des énergies en cas de panne d'un moteur d'hélicoptère ; et
- en figure 4, un bloc diagramme d'un exemple de groupe de puissance principal selon l'invention dans un compartiment arrière d'aéronef, en liaison avec une cabine d'aéronef équipée d'un système de contrôle d'environnement ECS.

### DESCRIPTION DETAILLEE DE MODES DE REALISATION

Dans toutes les figures, les éléments identiques ou semblables, exerçant une même fonction, sont identifiés avec des signes de référence identiques ou semblables.

En référence à la figure 1, le graphe des variations de la ligne de fonctionnement LF d'un moteur d'aéronef est représenté dans un référentiel de rapport de pressions d'air P/P en fonction du débit d'air corrigé D pour une phase de vol donnée. Le débit d'air est dit corrigé pour permettre une représentation graphique significative intégrant les influences des différents paramètres intervenant. Une ligne de pompage LP et les lignes de fonctionnement LF, LF2 du moteur sont reportées dans ce référentiel. La ligne de fonctionnement LF reste en dessous de cette ligne de pompage LP pour éviter toute perte de poussée. La marge au pompage MP d'écart entre la ligne de fonctionnement et la ligne de pompage diminue avec la vitesse (ou le débit d'air) du corps HP du moteur, par exemple entre la vitesse maximale N_{M} et la vitesse de ralenti N_{R} autorisées pour cette phase de vol.

Une marge au pompage réduite augmente le rendement du moteur mais peut comporter des risques de pompage si la ligne de fonctionnement se rapproche trop près de la ligne de pompage. Par exemple, lors d'une accélération à partir de la vitesse de ralenti N_{R}, les points de fonctionnement Pf1 en transitoire décrivent sur le graphe la ligne de fonctionnement LF1 de N_{R} à N_{M}. La diminution de marge au pompage MP le long de cette ligne LF1 est due à l'injection de carburant dans la chambre de combustion nécessaire à l'accélération du corps HP. La position du point Pf1 représentée sur le graphe correspond à la marge au pompage minimale. Des prélèvements mécaniques sur le corps HP pour alimenter des équipements (flèche PM) réduisent également la marge au pompage. Les spécifications actuelles tendent vers une augmentation sensible de ces prélèvements qui augmentent sensiblement les risques de pompage.

Des remises de gaz lors d'accélérations sont alors délicates à gérer. Par ailleurs, les prélèvements d'air (flèche PA) par exemple au niveau du compresseur du moteur, pour fournir de l'énergie à d'autres équipements (conditionnement d'air de la cabine, etc.) augmentent la marge au pompage. La ligne de fonctionnement passe alors de la ligne LF à la ligne LF2, ce passage entraîne une perte de rendement à débit constant comme illustré par la flèche P_{R}.

Une opérabilité optimisée est réalisée par un apport de puissance provenant d'une source principale, en termes de capacité d'accélération maximalisée : un tel apport permet d'augmenter la puissance délivrée sur l'arbre du corps HP par fourniture simultanée de puissance par injection de carburant dans la chambre de combustion et de puissance provenant du groupe GPP. Cet apport supplémentaire augmente le taux d'accélération du corps HP, en conservant la marge au pompage MP des moteurs principaux dans une phase de vol où cette marge serait au minimum sans l'apport de puissance supplémentaire, avec une ligne de fonctionnement LF au plus près du pompage. De plus, cet apport supplémentaire permet de diminuer la vitesse de ralenti N_{R} à marge au pompage identique en phase transitoire. En outre, un tel apport permet en phase stabilisée de maintenir un niveau de ralenti N_{R0} inférieur à celui déterminé par la capacité d'autonomie du générateur de gaz.

En absence de groupe de puissance principal, chaque moteur principal fournit, à égalité dans les conditions nominales, de l'énergie propulsive Ep et de l'énergie non propulsive Enp. Comme cela apparaît en détail ci-après, un GPP peut fournir la totalité ou une partie de l'énergie non propulsive entre chaque moteur principal et le GPP. Ce GPP délivre également quelques pourcents d'énergie propulsive par fourniture de puissance sur le corps HP des moteurs principaux dans les phases transitoires, en particulier en cas de panne d'un moteur principal.

En référence à la figure 2a, se rapportant à un état initial en vol stabilisé d'un aéronef, l'énergie non propulsive Enp est fournie aux équipements 100 par les moteurs principaux 200, MP1 et MP2, ainsi que par le groupe GPP 1 selon une équipartition Enp/3. Cette équipartition est également préconisée pour définir les points de dimensionnement des turbomachines. En phase de descente, pendant laquelle les moteurs principaux ne sont pas sollicités, il est préférable que l'énergie non propulsive soit fournie principalement ou totalement par le groupe GPP.

En variante (figure 2b), l'énergie non propulsive Enp n'est fournie que par le groupe GPP 1 en vol nominal afin de permettre aux moyens de commutation (en particulier les contacteurs électriques), en cas de panne d'un moteur, de disposer de temps de réaction suffisant. En effet, les temps de réponse lors d'accélérations à fournir par un seul moteur peuvent être insuffisants si ce moteur ne mobilise pas toute sa puissance (voir ci-après le cas de panne moteur).

Par ailleurs, la poussée 300 (2xEp) en vol nominal est fournie à égalité par chacun des moteurs principaux. Le groupe GPP 1 peut délivrer une proportion d'énergie propulsive kxEp par fourniture de puissance sur chacun des corps HP des moteurs, k pouvant atteindre quelques pourcents.

En cas de panne d'un moteur MP2 dans un aéronef, en particulier un hélicoptère équipé d'un groupe GPP 1, tel qu'illustré dans l'exemple de la figure 3, le moteur 200 sain restant MP1 est d'abord configuré pour fournir toute l'énergie propulsive : sa part de fourniture d'énergie non propulsive Enp aux équipements 100 passe alors de Enp/3 (hors panne de l'autre moteur cf. figure 2a) à 0xEnp, et sa fourniture en énergie propulsive passe de Ep à 2xEp pour donner toute la poussée 300. Le groupe GPP 1 est ensuite configuré pour fournir toute l'énergie non propulsive Enp, en passant de Enp/3 à Enp. Avantageusement, le groupe GPP 1 continue à fournir une proportion kxEp d'énergie propulsive au corps HP du moteur sain avec un coefficient k adapté et un taux d'accélération tels que la marge au pompage du moteur sain soit suffisante. En transitoire, le coefficient adapté a une valeur kₜ et le groupe GPP fournit alors une énergie propulsive transitoire kₜEpt sur le corps HP du moteur sain MP1 qui fournit toute la poussée 2xEpt.

Dans le cas d'un aéronef en phases de vol transitoires (figure 2b), en particulier pour un avion, le groupe GPP 1 délivre de l'énergie propulsive transitoire kₜEpt, avec un coefficient kₜ, sur le corps HP de chacun des moteurs principaux 200 qui fournit 1xEpt, 2xEpt étant l'énergie propulsive totale à délivrer en phase transitoire. Le groupe GPP fournit encore la totalité de l'énergie non propulsive, soit Enp, au-delà de l'énergie 2kₜEpt.

La puissance fournie sur le corps HP des moteurs principaux est délivrée par le générateur, ici un alternateur, équipant le groupe GPP en liaison avec le démarreur électrique des moteurs principaux converti en moteur, comme lors du démarrage au sol des moteurs principaux.

En particulier, le groupe GPP apporte de la puissance sur le corps HP des moteurs principaux afin d'effectuer des accélérations avec un niveau de ralenti réglé au plus bas.

En référence à la figure 4 d'un bloc diagramme schématisé, un groupe GPP 1 est agencé dans un compartiment arrière 2 situé en aval de l'aéronef 3. La cabine des passagers 4 est située plus en amont et couplée au compartiment arrière 2 via un compartiment intermédiaire 5. Une cloison de pressurisation 6 sépare la cabine 4 du compartiment intermédiaire et une cloison feu 7 isole le compartiment intermédiaire 5 du compartiment arrière 2, équipé d'une entrée d'air extérieur 21 et d'une tuyère de sortie 22.

Le groupe GPP 1 comporte un moteur 10 de type APU mais de classe moteur, combiné à une structure de récupération d'énergie. Le moteur auxiliaire se compose d'un générateur de gaz ou corps HP 11, comprenant un compresseur d'entrée 110 d'un flux d'air F1 provenant de l'entrée d'air 21, une chambre de combustion 111 et une turbine 112 d'entraînement du compresseur 110 par un arbre HP 113. Ce générateur de gaz est couplé en entrée à un canal de circulation d'air K1 monté sur l'entrée d'air extérieur 21 et, en sortie, à une turbine de puissance 12 qui délivre un flux d'air chaud F2, typiquement d'environ 500 à 600°C .

La structure de récupération d'énergie est centrée sur une turbine de récupération 13 en liaison avec un dispositif d'insonorisation 14, afin d'éviter la remontée des bruits aérodynamiques hors du compartiment, en particulier dans la cabine.

Cette turbine de récupération 13 est couplée à la turbine de puissance 12 pour entraîner des équipements 100 - mécaniques, pneumatiques (compresseurs), électriques (alternateurs) et/ou hydrauliques (pompes)- en particulier un compresseur de charge 15 et un démarreur/générateur 16, via une boîte de transfert de puissance 17 dans l'exemple. Cette boîte 17 est équipée de réducteurs et de renvois (non représentés) adaptés à la transmission de puissance. La turbine de puissance 12 fournit sa puissance à la boîte 17 via un arbre 121, cet arbre étant traversant dans l'exemple illustré. Alternativement cet arbre peut être non traversant ou un arbre extérieur par un boîtier de réduction approprié (non représenté). Ce boîtier est avantageusement équipé d'une roue libre pour sa déconnexion dans les phases de non récupération, par exemple dans le cas de porte de cabine avion ouverte.

Le compresseur de charge 15 alimente en air un système de contrôle d'environnement dit système ECS 41 de la cabine 4 pour lui transmettre, via un mélangeur de recyclage 42, de l'air comprimé provenant de l'entrée d'air extérieur 21 par une branche K11 du canal K1. Le compresseur de charge 15 est régulé par une commande de régulation 19 qui communique avec l'unité de contrôle (non représentée) afin de fournir l'énergie pneumatique nécessaire à la cabine. En variante, le compresseur d'entrée 110 peut servir de compresseur de charge 15 par un prélèvement d'air approprié.

Au moins une vanne variable 40, dite de régulation de pression cabine, fait circuler le flux d'air F3 de la sortie 43 de la cabine 4 à la structure de récupération d'énergie via un canal K2. Avantageusement, le canal K2 passe dans le compartiment intermédiaire 5 pour que le flux d'air F3 refroidisse les électroniques de puissance 50 d'une armoire 51 - ces accessoires étant dédiées à différents systèmes de fonctionnement de l'aéronef (train d'atterrissage, etc.), bien entendu non opérationnels lorsque la porte cabine est ouverte. En sortie du compartiment 5, le flux d'air F3 a une température d'environ 40°C.

La structure de récupération comporte dans cet exemple un échangeur thermique 18 équipé d'un circuit primaire C1, relié en entrée à la sortie du flux d'air chaud F2 et en sortie à la tuyère 22 - le flux F2 passant alors typiquement d'une température de l'ordre de 550°C à 300°C - et d'un circuit secondaire C2 relié en entrée au flux d'air F3 provenant de la cabine 4 et en sortie à la turbine de récupération 13. Le flux F3 a alors une température sensiblement plus élevée qu'à l'entrée (environ 40°), par exemple de l'ordre de 150°C. En sortie de la turbine de récupération 13, le flux d'air F3 est dispersé dans le compartiment arrière 2 pour refroidir les équipements 100 (à environ 40°) puis récupéré sous forme de flux F'3, par réflexion sur les parois 200 du compartiment, dans la tuyère 22. La récupération a lieu par un effet de trompe induit, à l'entrée élargie 221 de cette tuyère, par la vitesse d'éjection des gaz du flux d'air chaud F2 de la turbine de puissance 12 au sortir de l'échangeur 18.

## Revendications

1. Procédé d'optimisation de l'opérabilité de la motorisation d'un aéronef comportant des moteurs principaux (200) comme sources de motorisation principales, **caractérisé en ce qu'**il consiste, à l'aide d'une source de puissance principale (1) de classe moteur apte à la certification moteur d'utilisation pendant toutes les phases de vol comme source de motorisation, à délivrer la totalité de l'énergie non propulsive (Enp) et, pendant les phases transitoires des moteurs, à fournir au plus partiellement une puissance supplémentaire (kEp, kₜEpt) sur le corps haute pression HP des moteurs principaux (200) et à augmenter la marge de pompage des moteurs principaux (200).

2. Procédé d'optimisation selon la revendication 1, dans lequel la puissance fournie sur le corps HP des moteurs principaux (200) est délivrée par un générateur électrique équipant la source de puissance principale en liaison avec un démarreur électrique des moteurs principaux (200) converti en moteur.

3. Procédé d'optimisation selon la revendication 1, dans lequel la puissance fournie sur le corps HP des moteurs principaux (200) est délivrée par prélèvement d'air comprimé sur la source de puissance principale en liaison avec un démarreur à air des moteurs principaux (200) converti en moteur.

4. Procédé d'optimisation selon l'une quelconque des revendications 1 à 3, dans lequel la source de puissance principale (1) apporte de la puissance sur le corps HP des moteurs principaux (200) afin de fournir des taux d'accélération plus élevés.

5. Procédé d'optimisation selon la revendication 4, dans lequel les taux d'accélération plus élevées sont associés à un ralenti (N_{R0}) réglé à un niveau inférieur au ralenti nominal (N_{R}).

6. Procédé d'optimisation selon l'une quelconque des revendications 1 à 5, dans lequel, en phase stabilisée comme en phase transitoire, la source de puissance principale (1) fournit de la puissance par des apports d'énergie correspondant à la phase (kEp, kₜEpt) sur le corps HP des moteurs principaux (200).

7. Procédé d'optimisation selon l'une quelconque des revendications 1 à 6, dans lequel, en cas de panne d'un moteur principal, la source de puissance principale (1) fournit de la puissance (kEp, kₜEpt) sur le corps HP du moteur principal sain (MP1) pour que ce dernier puisse disposer d'un taux d'accélération tel que sa marge au pompage (MP) soit suffisante.

8. Groupe de puissance principal d'aéronef (3) de mise en oeuvre du procédé d'optimisation de l'opérabilité de la motorisation d'un aéronef comportant des moteurs principaux (200) comme sources de motorisation principales, le procédé consistant, à l'aide d'une source de puissance principale (1) de classe moteur apte à la certification moteur d'utilisation pendant toutes les phases de vol comme source de motorisation, à délivrer la totalité de l'énergie non propulsive (Enp) et, pendant les phases transitoires des moteurs, à fournir au plus partiellement une puissance supplémentaire (kEp, kₜEpt) sur le corps haute pression HP des moteurs principaux (200) et à augmenter la marge de pompage des moteurs principaux (200), le groupe de puissance principal comportant des équipements consommateurs d'énergie (100), une cabine (4) renouvelée en air et régulée en température et/ou en pression à l'aide d'un système de régulation ECS (41), des moteurs principaux de génération de puissance et une unité de contrôle de vol, le groupe de puissance principal, étant intégré dans un compartiment (2) isolé par une cloison feu (7) des autres zones (5) de l'aéronef équipé d'une entrée d'air extérieur (21) et d'une tuyère de sortie (22), **caractérisé en ce qu'**il comporte un groupe de puissance de classe moteur (10) comme source de puissance principale (1) équipée d'un générateur de gaz (11) et d'une turbine de puissance (12) d'entraînement d'équipements (100) comprenant un compresseur de charge (15), ce compresseur de charge étant couplé, via une commande de régulation (19) qui communique avec l'unité de contrôle, au système ECS (41) afin de fournir l'énergie pneumatique nécessaire à la cabine (4).

9. Groupe de puissance principal selon la revendication précédente, **caractérisé en ce qu'**il est couplé à une structure de récupération comportant une turbine de récupération d'énergie (13) d'entraînement des équipements (100) avec la turbine de puissance (12) et couplée, en entrée d'air, à la sortie de la cabine (4) pour refroidir, en sortie d'air, les équipements (100), le compresseur de charge (15) étant intégré à cette structure de récupération comme fournisseur d'énergie pneumatique à la cabine (4).

10. Groupe de puissance principal selon la revendication précédente, dans lequel la turbine de récupération (13) éjecte un flux d'air (F3) en sortie dans le compartiment (2) du groupe de puissance principal (1) qui, après avoir refroidi les équipements et accessoires contenus dans le compartiment arrière (2), est évacué (F'3) dans la tuyère d'échappement (22) par un effet de trompe induit par la vitesse d'éjection des gaz du flux d'air chaud (F2) issu de la turbine de puissance (12).

## Patentansprüche

1. Verfahren zur Optimierung des Motorantriebeinsatzes eines Flugzeugs, umfassend Hauptmotoren (200) als Hauptquellen der Motorisierung, **dadurch gekennzeichnet, dass** es darin besteht, mit Hilfe einer Hauptleistungsquelle (1) einer Motorklasse, die geeignet für die Zertifizierung als Motor zur Verwendung während aller Flugphasen als Motorisierungsquelle ist, die Gesamtheit der nicht propulsiven Energie (Enp) bereitzustellen, und während der Übergangsphasen der Motoren höchstens teilweise eine zusätzliche Leistung (kEp, kₜEpt) an den Hochdruckkörper HP der Hauptmotoren (200) zu liefern und den Pumpspielraum der Hauptmotoren (200) zu erhöhen.

2. Verfahren zur Optimierung nach Anspruch 1, wobei die Leistung, die an den HP-Körper der Hauptmotoren (200) geliefert wird, durch einen elektrischen Generator bereitgestellt wird, der die Hauptleistungsquelle in Verbindung mit einem elektrischen Anlasser der Hauptmotoren (200), verwandelt in einen Motor, ausstattet.

3. Verfahren zur Optimierung nach Anspruch 1, wobei die Leistung, die an den HP-Körper der Hauptmotoren (200) geliefert wird, durch Entnahme von komprimierter Luft von der Hauptleistungsquelle in Verbindung mit einem Luftanlasser der Hauptmotoren (200), verwandelt in einen Motor, bereitgestellt wird.

4. Verfahren zur Optimierung nach einem der Ansprüche 1 bis 3, wobei die Hauptleistungsquelle (1) Leistung an den HP-Körper der Hauptmotoren (200) führt, um höhere Beschleunigungsniveaus zu liefern.

5. Verfahren zur Optimierung nach Anspruch 4, wobei die höheren Beschleunigungsniveaus mit einem Leerlauf (N_{RO}) assoziiert sind, der auf ein niedrigeres Niveau als den nominalen Leerlauf (N_{R}) eingestellt ist.

6. Verfahren zur Optimierung nach einem der Ansprüche 1 bis 5, wobei in der stabilisierten Phase ebenso wie in der Übergangsphase die Hauptleistungsquelle (1) Leistung durch Energiezuführungen, die der Phase (kEp, kₜEpt) entsprechen, an den HP-Körper der Hauptmotoren (200) liefert.

7. Verfahren zur Optimierung nach einem der Ansprüche 1 bis 6, wobei im Fall eines Ausfalls eines Hauptmotors die Hauptleistungsquelle (1) Leistung (kEp, kₜEpt) an den HP-Körper des funktionierenden Hauptmotors (MP1) liefert, damit dieser Letzter über eine derartige Beschleunigungsrate verfügen kann, dass sein Pumpspielraum (MP) ausreichend ist.

8. Hauptleistungsgruppe eines Flugzeugs (3) zur Durchführung des Verfahrens zur Optimierung des Motorantriebeinsatzes eines Flugzeugs, umfassend Hauptmotoren (200) als Hauptquellen der Motorisierung, wobei das Verfahren darin besteht, mit Hilfe einer Hauptleistungsquelle (1) einer Motorklasse, die geeignet für die Zertifizierung als Motor zur Verwendung während aller Flugphasen als Motorisierungsquelle ist, die Gesamtheit der nicht propulsiven Energie (Enp) bereitzustellen, und, während der Übergangsphasen der Motoren, höchstens teilweise eine zusätzliche Leistung (kEp, ktEpt) an den Hochdruckkörper HP der Hauptmotoren (200) zu liefern und den Pumpspielraum der Hauptmotoren (200) zu erhöhen, wobei die Hauptleistungsgruppe Energieverbrauchsausrüstungen (100) umfasst, eine Kabine (4), deren Luft erneuert und deren Temperatur und/oder Druck mit Hilfe eines Regulierungssystems ECS (41) reguliert wird, Hauptmotoren zur Erzeugung von Leistung und eine Flugsteuereinheit, wobei die Hauptleistungsgruppe in ein Abteil (2) integriert ist, das durch eine Feuertrennwand (7) von den anderen Bereichen (5) des Flugzeugs isoliert ist, ausgestattet mit einem Eingang von Außenluft (21) und einer Ausgangsdüse (22), **dadurch gekennzeichnet, dass** sie eine Leistungsgruppe der Motorklasse (10) als Hauptleistungsquelle (1) umfasst, ausgestattet mit einem Gasgenerator (11) und einer Leistungsturbine (12) zum Antrieb der Ausrüstungen (100), umfassend einen Lastkompressor (15), wobei dieser Lastkompressor über eine Regulierungssteuerung (19), die mit der Kontrolleinheit kommuniziert, mit dem System ECS (41) gekoppelt ist, um die erforderliche pneumatische Energie an die Kabine (4) zu liefern.

9. Hauptleistungsgruppe nach dem vorhergehenden Anspruch, **dadurch gekennzeichnet, dass** sie mit einer Rückgewinnungsstruktur verbunden ist, umfassend eine Turbine zur Rückgewinnung von Energie (13) zum Antrieb der Ausrüstungen (100) mit der Leistungsturbine (12) und gekoppelt, im Lufteingang, an den Ausgang der Kabine (4), um am Luftausgang die Ausrüstungen (100) zu kühlen, wobei der Lastkompressor (15) in diese Struktur zur Rückgewinnung als Lieferant von pneumatischer Energie an die Kabine (4) integriert ist.

10. Hauptleistungsgruppe nach dem vorhergehenden Anspruch, **dadurch gekennzeichnet, dass** die Turbine zur Rückgewinnung (13) einen Luftfluss (F3) am Ausgang in das Abteil (2) der Hauptleistungsgruppe (1) ausstößt, der, nachdem er die Ausrüstungen und das Zubehör, die im hinteren Abteil (2) enthalten sind, abgekühlt hat, in das Abgasrohr (22) durch einen Saugeffekt evakuiert (F'3) wird, der durch die Ausstoßgeschwindigkeit der Gase des Heißluftflusses (F2) induziert wird, der aus der Leistungsturbine (12) stammt.

## Claims

1. Method for optimizing the operability of the engine set of an aircraft including main engines (200) as main drive sources, **characterized in that** it consists, by means of an engine-type main power source (1) fit for the certification as engine usable during all flight phases as a drive source, in producing the totality of the non-propulsive energy (Enp) and, during the transient phases of the engines, in supplying at most partially an additional power (kEp, kₜEpt) to the high-pressure body HP of the main engines (200) and in increasing the surge margin of the main engines (200).

2. Optimization method according to claim 1, in which the power supplied to the HP body of the main engines (200) is produced by an electric generator fitting the main power source in collaboration with an electric starter of the main engines (200) converted into a drive.

3. Optimization method according to claim 1, in which the power supplied to the HP body of the main engines (200) is produced by ways of a bleed of compressed air from the main power source in collaboration with an air starter of the main engines (200) converted into a drive.

4. Optimization method according to any of claims 1 to 3, in which the main power source (1) provides power to the HP body of the main engines (200) in order to obtain higher acceleration rates.

5. Optimization method according to claim 4, in which the higher acceleration rates are associated with an idle (N_{R0}) adjusted at a lower level than the nominal idle (N_{R}).

6. Optimization method according to any of claims 1 to 5, in which, in steady-state phase as well as in transient phase, the main power source (1) supplies power to the HP body of the main engines (200) through energy supplies corresponding to the phase (kEp, kₜEpt).

7. Optimization method according to any of claims 1 to 6, in which, in the event of a failure of a main engine, the main power source (1) supplies power (kEp, kₜEpt) to the HP body of the sound main engine (MP1) so that the latter can have an acceleration rate such that its surge margin (MP) is sufficient.

8. Main power unit of an aircraft (3) for implementing the method for optimizing the operability of the engine set of an aircraft including main engines (200) as main drive sources, the method consisting, by means of an engine-type main power source (1) fit for the certification as engine usable during all flight phases as a drive source, in producing the totality of the non-propulsive energy (Enp) and, during the transient phases of the engines, in supplying at most partially an additional power (kEp, kₜEpt) to the high-pressure body HP of the main engines (200) and in increasing the surge margin of the main engines (200), the main power unit including energy-consuming equipments (100), a cabin (4) the air of which is renewed and the temperature and/or pressure of which are regulated by means of a regulation system ECS (41), main power-generating engines and a flight control unit, the main power unit being built into a compartment (2) which is insulated from the other zones (5) of the aircraft with a fireproof bulkhead (7) and fitted with an outside-air intake (21) and an exhaust nozzle (22), **characterized in that** it includes an engine-type power unit (10) as main power source (1) fitted with a gas generator (11) and with a power turbine (12) for driving equipments (100) including a supercharger (15), said supercharger being coupled, via a regulation control (19) which communicates with the control unit, with the ECS system (41) in order to supply the necessary pneumatic energy to the cabin (4).

9. Main power unit according to the preceding claim, **characterized in that** it is coupled with a recovery structure that includes an energy-recovery turbine (13) for driving the equipments (100) with the power turbine (12) and that is coupled, on the air-inlet side, with the outlet of the cabin (4) in order to cool, on the air-outlet side, the equipments (100), the supercharger (15) being built into this recovery structure as a supplier of pneumatic energy to the cabin (4).

10. Main power unit according to the preceding claim, in which the recovery turbine (13) ejects, on the outlet side, an air flow (F3) into the compartment (2) of the main power unit (1) which, after it has cooled the equipments and auxiliary equipments contained in the aft compartment (2), is evacuated (F'3) into the exhaust nozzle (22) by a jet pump action resulting from the efflux velocity of the hot air flow (F2) coming out of the power turbine (12).
